**Europäisches Patentamt**

**European Patent Office**

**Office européen des brevets**

(19)

(11) Numéro de publication : **0 026 701 B1**

(12) **FASCICULE DE BREVET EUROPÉEN**

(45) Date de publication du fascicule du brevet :
07.12.83

(51) Int. Cl.³ : **G 01 N 37/00, G 01 N 27/90**

(21) Numéro de dépôt : **80401344.9**

(22) Date de dépôt : **19.09.80**

(54) Dispositif d'entraînement pour sonde de contrôle de tubes.

(30) Priorité : 27.09.79 FR 7924048

(43) Date de publication de la demande :
08.04.81 Bulletin 81/14

(45) Mention de la délivrance du brevet :
07.12.83 Bulletin 83/49

(84) Etats contractants désignés :
**BE DE GB IT NL SE**

(56) Documents cités :
**FR-A- 2 250 994**
**FR-A- 2 339 231**
**US-A- 3 277 420**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Pigeon, Michel ·**
**14, Avenue Foch**
**F-91440 Bures sur Yvette (FR)**
Inventeur : **Vienot, Claude**
**16, rue Gaston Charle**
**F-94120 Fontenay sous Bois (FR)**
Inventeur : **Saglio, Robert**
**9, rue des Marchais**
**F-92160 Antony (FR)**

(74) Mandataire : **Mongrédien, André et al**
**c/o BREVATOME 25, rue de Ponthieu**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Dispositif d'entraînement pour sonde de contrôle de tubes

L'invention se rapporte à un dispositif d'entraînement pour sonde destiné au contrôle de tubes tels que les tubes d'échangeurs de chaleur, par exemple au moyen de sondes de mesures à courants de Foucault.

Dans les appareils tels que les condenseurs, les échangeurs de chaleur, et les générateurs de vapeur, il est nécessaire de pouvoir contrôler à tout moment les tubes, notamment lorsque les liquides primaire et secondaire de l'échangeur sont incompatibles ou lorsque l'un des fluides a été préalablement irradié, ce qui est le cas, par exemple, dans les échangeurs équipant des réacteurs nucléaires.

Etant donné le grand nombre de tubes équipant généralement ces appareils, le contrôle des tubes est une opération longue et contraignante. Il est donc nécessaire de réduire au maximum les temps morts que sont l'injection de la sonde dans le tube, le démarrage des enregistreurs, le changement de tube, etc.

Les dispositifs connus qui permettent de contrôler les tubes d'appareils tels que les échangeurs de chaleur au moyen de sondes à courants de Foucault, sont généralement des dispositifs pneumatiques du type tireur-pousseur-enrouleur qui sont particulièrement lourds et qui ne sont pas toujours automatiques.

A titre d'exemple, le document FR-A-2 339 231 concerne un dispositif connu dans lequel la sonde est introduite et retirée au moyen d'un système tireur-pousseur-enrouleur. Ce dispositif est plus particulièrement adapté au cas où les tubes à contrôler comportent des parties coudées. Dans ces parties coudées, les tubes opposent une plus forte résistance au déplacement de la sonde, de telle sorte qu'on prévoit une source de fluide sous pression délivrant une force d'appoint lors de l'introduction de la sonde.

Dans le cas particulier du contrôle de tubes droits et de longueur donnée, l'invention a pour but de réaliser un dispositif d'entraînement pour sonde de contrôle qui soit à la fois portable et automatique et qui permette d'introduire la sonde le plus rapidement possible dans le tube et de ramener celle-ci à une vitesse régulière et de préférence réglable.

Dans ce but, il est proposé un dispositif d'entraînement pour sonde de contrôle de tubes, et notamment pour sonde de mesure à courants de Foucault, ce dispositif comprenant un câble auquel est reliée la sonde, des moyens d'entraînement électriques aptes à agir sur ledit câble, et une source de fluide sous pression, caractérisé en ce qu'il comprend de plus des moyens de détection des positions extrêmes avant et arrière de la sonde dans le tube, un système de commande automatique à fluide sous pression comprenant un boîtier définissant un premier alésage et un tiroir reçu en coulissement dans ledit alésage, le boîtier comportant un premier orifice d'entrée qui communique avec la source de fluide sous pression et au moins un orifice de sortie qui communique avec le tube à contrôler en arrière de la sonde, et des moyens de mise en œuvre des moyens d'entraînement électriques sensibles à la position du tiroir dans ledit alésage, le tiroir étant sensible à la mise en œuvre des moyens de détection avant et arrière pour se déplacer dans ledit alésage afin, soit de mettre en communication l'orifice d'entrée avec ledit orifice de sortie, soit d'actionner les moyens de mise en œuvre des moyens d'entraînement électriques, respectivement.

De préférence, les moyens d'entraînement électriques définissent une vitesse d'extraction de la sonde constante et réglable.

Conformément à une réalisation de l'invention, le boîtier comporte un deuxième orifice de sortie qui communique avec un manocontact constituant les moyens de mise en œuvre des moyens d'entraînement électriques.

Les moyens d'entraînement électriques peuvent agir sur le câble par l'intermédiaire de moyens d'embrayage normalement débrayés. Ces moyens d'embrayage comprennent alors au moins deux galets susceptibles de venir engager le câble par friction sous l'action du fluide sous pression provenant du deuxième orifice de sortie, à l'encontre de moyens élastiques de rappel.

Selon une autre réalisation de l'invention, les moyens de détection comprennent un organe avant et un organe arrière portés par le câble, lesdits organes étant susceptibles de venir obturer un orifice de fuite avant et un orifice de fuite arrière communiquant avec la source de fluide sous pression lorsque la sonde atteint la position extrême avant et la position extrême arrière, respectivement, de façon à contrôler le fonctionnement du système de commande automatique. De préférence, le câble est alors reçu dans un passage ménagé dans le boîtier, ce passage définissant une partie avant et une partie arrière destinées à recevoir respectivement l'organe avant et l'organe arrière, les orifices de fuite avant et arrière débouchant respectivement dans la partie avant et dans la partie arrière du passage. Le boîtier peut être réalisé en deux parties articulées dont le plan de joint passe par l'axe dudit passage, ce qui permet de mettre en place le câble et la sonde à l'intérieur du dispositif. De préférence, les moyens d'entraînement électriques sont alors disposés dans l'une desdites parties et le système de commande automatique est disposé dans l'autre partie.

Selon une autre réalisation de l'invention, les organes avant et arrière comprennent chacun une partie fixée au câble, une partie susceptible de venir obturer l'orifice de fuite correspondant, et des moyens d'amortissement disposés entre lesdites parties.

Conformément à encore une autre réalisation de l'invention, le système de commande automatique comprend de plus un premier piston reçu en coulissement dans ledit alésage et définissant avec la paroi du boîtier une chambre avant communiquant avec l'orifice de fuite avant, de telle sorte que l'obturation de cette dernière par l'organe avant commande le déplacement du premier piston et du tiroir, de façon à interrompre la communication entre l'orifice d'entrée et le premier orifice de sortie et à actionner les moyens de mise en œuvre des moyens d'entraînement électriques.

Conformément à encore une autre réalisation de l'invention, le système de commande automatique comprend de plus un second piston reçu en coulissement dans un second alésage et définissant avec la paroi du boîtier une chambre arrière communiquant avec l'orifice d'entrée et avec l'orifice de fuite arrière, le boîtier définissant de plus un orifice d'échappement communiquant avec l'atmosphère, le second piston étant sollicité par des moyens élastiques vers une position dans laquelle la communication entre le second orifice d'entrée et l'orifice d'échappement est interrompue, et l'obturation de l'orifice de fuite arrière par l'organe arrière commandant le déplacement du second piston à l'encontre des moyens élastiques de façon à établir ladite communication.

On décrira maintenant, à titre d'exemple non limitatif, un mode de réalisation particulier de l'invention en se référant aux dessins annexés dans lesquels :

la Figure 1 est une vue en perspective d'un dispositif d'entraînement portable réalisé conformément à l'invention,

la Figure 2 est une vue en coupe longitudinale du dispositif représenté sur la Fig. 1 montrant plus particulièrement les moyens pour détecter les positions extrêmes avant et arrière de la sonde dans le tube porté par le câble auquel est reliée la sonde, et

les Figures 3, 4, 5 et 6 sont des vues en coupe longitudinale du système de commande automatique à fluide sous pression du dispositif d'entraînement représenté sur les Fig. 1 et 2 illustrant de façon schématique les différentes phases de fonctionnement de ce dispositif.

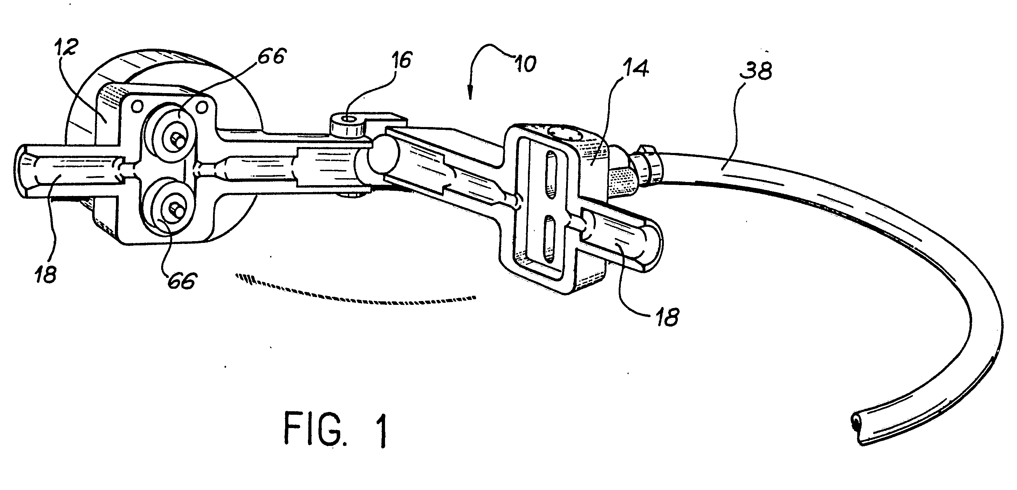

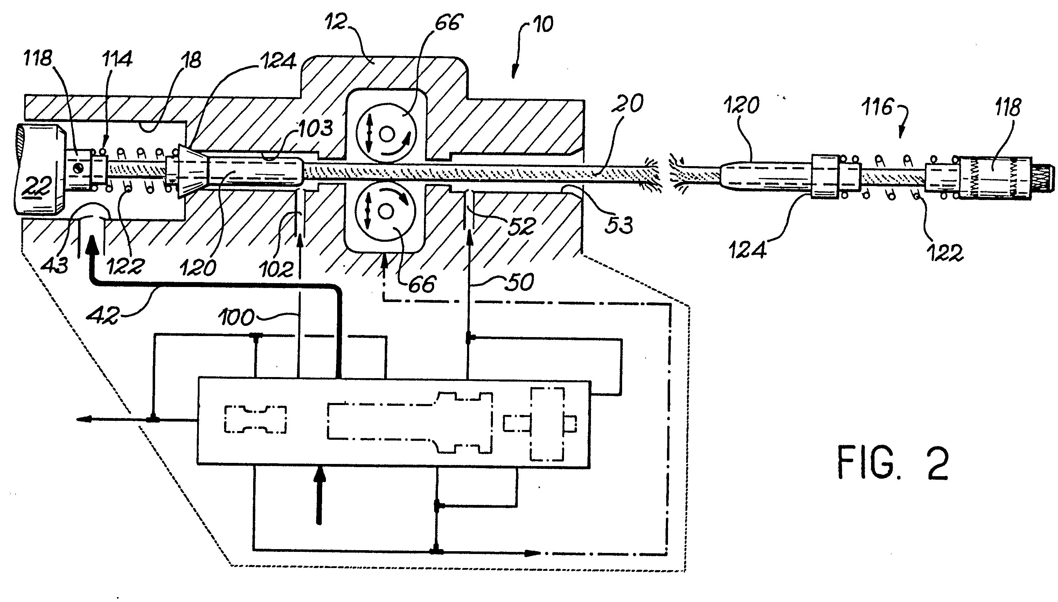

Comme l'illustre en particulier la Fig. 1, le dispositif d'entraînement selon l'invention, désigné de façon générale par la référence 10, comprend un boîtier en deux parties 12 et 14 articulées autour d'un axe 16. Le plan de joint des parties 12 et 14 du boîtier passe par l'axe d'un passage 18 destiné à recevoir un câble 20 auquel est reliée une sonde de contrôle de tubes 22, telle qu'une sonde de mesure à courants de Foucault, comme l'illustre en particulier la Fig. 2. Le dispositif d'entraînement 10 selon l'invention, est conçu de façon à introduire la sonde 22 le plus rapidement possible dans un tube droit de longueur connue qu'il est nécessaire de contrôler, de façon connue, au moyen de la sonde 22 au cours du retour de celle-ci vers le dispositif, ce retour étant effectué de préférence à une vitesse régulière et réglable. Les tubes à contrôler automatiquement de cette manière sont généralement disposés dans des appareils présentant un nombre important de tubes tels que des condenseurs, des échangeurs de chaleur ou des générateurs de vapeur.

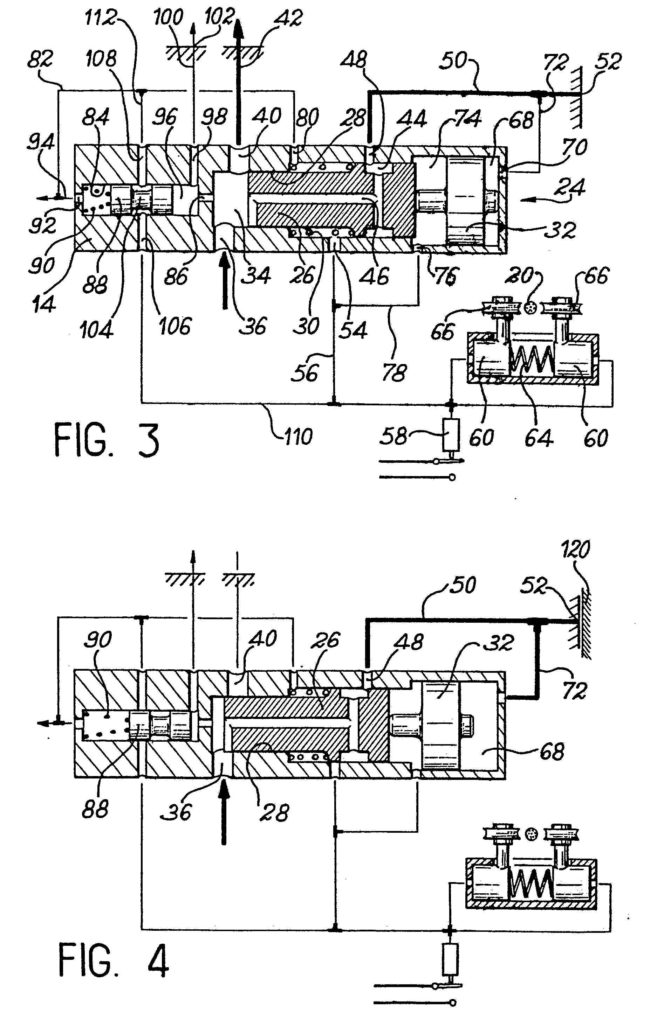

Conformément à l'invention et comme l'illustre en particulier la Fig. 13, le dispositif d'entraînement 10 comprend un système de commande automatique à fluide sous pression désigné de façon générale par la référence 24, disposé dans la partie 14 du boîtier. Le système 24 comprend un tiroir 26 reçu en coulissement dans un alésage étagé 28 formé dans la partie 14 du boîtier. Le tiroir 26 ainsi que l'alésage 28 comprennent une partie de grand diamètre et une partie de petit diamètre définissant entre elles des épaulements sur lesquels vient prendre appui un ressort 30 sollicitant le tiroir 26 vers la droite en considérant la Fig. 3, en butée contre un piston 32 disposé entre l'extrémité droite du tiroir 26 et le fond de l'alésage 28.

Lorsque le tiroir 26 occupe sa position de repos représentée sur la Fig. 3, une chambre d'entrée 34 est ménagée entre l'extrémité gauche du tiroir 26 et la partie 14 du boîtier communique avec une source de fluide sous pression (représentée schématiquement par une flèche), par un orifice d'entrée 36 auquel est raccordé un tuyau souple 38 représenté sur la Fig. 1. La chambre 34 communique également par un orifice de sortie 40 et par l'intermédiaire d'un passage représenté schématiquement en 42 avec une partie de grand diamètre 43 du passage 18 destinée à recevoir la sonde 22, comme l'illustre la Fig. 2. L'orifice 40 est légèrement décalé vers la droite par rapport au passage 36, comme l'illustre en particulier la Fig. 3, de telle sorte qu'il est obturé par le tiroir 26 lorsque celui-ci se déplace vers la gauche à l'encontre du ressort 30, avant que le tiroir ne vienne en butée contre l'extrémité gauche de l'alésage 28. L'orifice d'entrée 36 communique en permanence avec une chambre annulaire 44 définie dans la partie de grand diamètre du tiroir 26 par un passage longitudinal 46 ménagé dans celui-ci. Comme l'illustre la Fig. 3, la chambre annulaire 44 communique par un orifice de sortie 48 et par un passage 50, avec un orifice de fuite arrière 52 débouchant dans une partie 53 du passage 18 située à proximité de l'extrémité de celui-ci opposée à la sonde 22, lorsque le tiroir 26 est en position de repos.

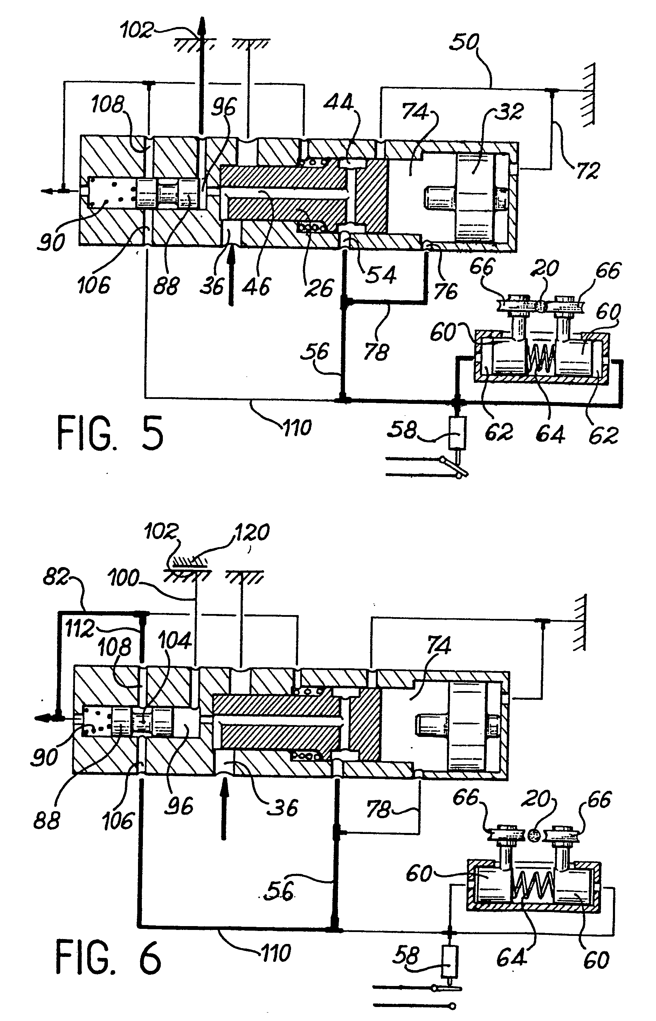

Au contraire, et comme l'illustre en particulier la Fig. 5, lorsque le tiroir 26 est déplacé dans sa position extrême vers la gauche à l'encontre du ressort 30, la chambre annulaire 44 communique par l'intermédiaire d'un second orifice de sortie 54 et d'un passage 56 avec un manocontact 58 commandant la mise en œuvre d'un moteur d'entraînement électrique (non représenté) et avec deux chambres 62 commandant le déplacement de deux pistons 60 l'un vers l'autre à l'encontre d'un ressort 64 disposé entre les pistons 60, de façon à solliciter deux galets d'entraînement 66 en engagement de friction avec le câble 20. Le moteur d'entraînement électrique dont la mise en œuvre est commandée par le manocontact 58 sollicite en rotation les galets 66 qui entraînent ainsi par friction le câble 20 dans la direction correspondant au retour de la sonde 22 vers le dispositif 10, comme on le verra par la suite.

Pour des raisons qui apparaîtront par la suite, une chambre avant 68 définie entre le piston 32 et le fond de l'alésage 28 communique par un orifice 70 et par un passage 72 avec le passage de fuite 50, et une chambre 74 définie entre le piston 32 et le tiroir 26 communique par un orifice 76 et par un passage 78 avec le passage 56. En outre, la chambre contenant le ressort 30 communique en permanence avec l'atmosphère par un orifice 80 et par un passage 82.

Comme l'illustre en particulier la Fig. 3, un second alésage 84 est ménagé dans le boîtier 14, dans le prolongement de l'alésage 28 du côté opposé au piston 32. L'alésage 84 reçoit en coulissement un second piston 88 sollicité vers la droite en considérant la Fig. 3 par un ressort 90 disposé entre le piston 88 et l'extrémité de l'alésage 84 opposée à l'alésage 28. Comme la chambre annulaire recevant le ressort 30, la chambre recevant le ressort 90 communique avec l'atmosphère par un orifice 92 et un passage 94. Par ailleurs, une chambre arrière 96 définie entre le piston 88 et l'autre extrémité de l'alésage 84 communique avec la chambre d'entrée 34 par un passage 86 et comprend un orifice de sortie 98 qui communique par un passage 100 avec un orifice de fuite avant 102 débouchant dans une partie 103 du passage 18 située en retrait de la partie de grand diamètre 43 destinée à recevoir la sonde 22. Le piston 88 présente dans sa partie centrale une gorge 104 susceptible de mettre en communication un second orifice d'entrée 106 avec un orifice d'échappement 108 lorsque la pression régnant dans la chambre 96 déplace le piston 88 à l'encontre de la force exercée par le ressort 90. L'orifice 106 communique par un passage 110 avec le passage 56 et l'orifice 108 communique par un passage 112 avec le passage 82, de telle sorte que le manocontact 58 et les chambres 62 sont mises à l'atmosphère lorsque le piston 88 occupe cette position.

Comme l'illustre en particulier la Fig. 2, les orifices de fuite avant 102 et arrière 52 sont susceptibles d'être obturés respectivement par un organe avant 114 et par un organe arrière 116. Chacun des organes 114 et 116 comprend un collier 118 fixé de façon rigide au câble 20 et une olive 120 susceptible de coulisser par rapport au câble 20 et reliée au collier 118 par un ressort d'amortissement 122. Les olives 120 de chacun des organes 114 et 116 sont disposées du côté du boîtier du dispositif d'entraînement 10 par rapport au collier 118, de façon à pénétrer dans les parties 103 et 53 du passage 18, dans lesquelles sont ménagés respectivement les orifices 102 et 52 et à venir en butée par un épaulement 124 contre les extrémités correspondantes desdites parties lorsque la sonde 22 occupe sa position extrême avant ou sa position extrême arrière par rapport au tube à explorer.

Le dispositif qui vient d'être décrit en se référant aux Fig. 1 à 6 fonctionne de la façon suivante :

Lorsque le dispositif d'entraînement selon l'invention est au repos, la sonde 22 est disposée dans la partie 43 du passage 18 et l'olive 120 de l'organe avant 114 est disposée dans la partie 103 du passage 18 et en butée par son épaulement 124, comme l'illustre la Fig. 2. L'orifice de fuite avant 102 est donc fermé, alors que l'orifice de fuite arrière 52 est ouvert. En outre, les différents éléments du système de commande automatique à fluide sous pression 24 occupent alors les positions représentées sur la Fig. 3. Par ailleurs, les pistons 60 sont sollicités en éloignement l'un de l'autre par le ressort 64, de telle sorte que les galets 66 sont maintenus éloignés du câble 20, et le manocontact 58 est ouvert, étant donné que les orifices 54 et 106 communiquent respectivement avec les orifices 80 et 108, c'est-à-dire avec l'atmosphère par l'intermédiaire des passages 82 et 112.

Lorsqu'on désire contrôler un tube rectiligne et de longueur connue dans un appareil tel qu'un condenseur, un échangeur de chaleur ou un générateur de vapeur, l'extrémité libre de la partie 43 du passage 18 est raccordée à ce tube, par exemple en l'amenant directement en vis-à-vis de celui-ci. Du fluide sous pression en provenance de la source (non représentée) est alors admis dans la chambre 34 par l'intermédiaire du conduit flexible 38 et de l'orifice d'entrée 36. Ce fluide est admis directement dans la partie 43 du passage 18, par l'orifice de sortie 40 et le passage 42, de telle sorte que la sonde 22 ainsi que le câble 20 et les organes 114 et 116 qui lui sont associés sont sollicités vers la gauche en considérant la Fig. 2 à l'intérieur du tube à contrôler (non représenté). L'orifice de fuite avant 102 est immédiatement ouvert et la pression tombe dans la chambre 96, de telle sorte que le piston 88 est déplacé vers la droite sous l'action du ressort 90, ce qui a pour effet d'interrompre la communication entre les orifices 106 et 108, comme l'illustre la Fig. 4. Le fluide sous pression admis dans la chambre 34 est également communiqué à l'orifice de fuite arrière 52 par l'intermédiaire du passage 46, de la chambre annulaire 44, de l'orifice 48 et du passage 50, et à l'orifice de fuite avant 102 par l'intermédiaire du passage 86, de la chambre 96, de l'orifice 98 et du passage 100. Etant donné que les olives 120 sont alors toutes deux éloignées des parties correspondantes 53 et 103 du passage 18, le fluide sous pression qui s'échappe par les orifices 52 et 102 est communiqué à l'atmosphère et n'a pas d'effet sur le fonctionnement du système 24. L'introduction de la sonde 22 dans le tube à contrôler étant réalisée directement sous l'action du fluide sous pression est donc extrêmement rapide.

Lorsque la sonde 22 atteint l'extrémité du tube à contrôler, l'olive 120 de l'organe arrière 116 vient pénétrer dans la partie 53 du passage 18 et engager son extrémité par son épaulement 124 de telle sorte que l'orifice de fuite arrière 52 ne communique plus avec l'atmosphère. La pression régnant dans les passages 50 et 72 augmente donc rapidement, et le piston 32 et le tiroir 26 sont sollicités vers la gauche sous l'action de la pression régnant dans la chambre 68, de façon à obturer l'orifice de sortie 40 comme l'illustre la Fig. 4. La communication entre la source de fluide sous pression (non représentée) et, par l'intermédiaire de la partie 43 du passage 18, le tube à contrôler, est alors interrompue. Il en résulte que le mouvement aller de la sonde 22 dans le tube à contrôler est terminé. On remarquera que la constitution de l'organe 116 en deux parties 118 et 120 reliées par un ressort 122 permet d'amortir le choc provoqué par l'arrêt brutal de la sonde en comprimant le ressort 122 entre le collier 118 et l'olive 120.

En poursuivant leur mouvement vers la gauche résultant de l'obturation de l'orifice de fuite arrière 52, le piston 32 et le tiroir 26 viennent en butée contre l'extrémité gauche de l'alésage 28. Dans cette position, et comme l'illustre la Fig. 5, la chambre annulaire 44 ne communique plus avec l'orifice 48 mais avec l'orifice 54. Il en résulte, d'une part, que le fluide sous pression introduit par l'orifice d'entrée 36 n'est plus introduit dans la chambre 68 par l'intermédiaire des passages 50 et 72, et, d'autre part, que ce fluide sous pression est communiqué simultanément au manocontact 58 et aux chambres 62 par l'intermédiaire du passage 56, et à la chambre 74 par l'intermédiaire du passage 78 et de l'orifice 76. Il en résulte, simultanément, la fermeture du circuit électrique alimentant le moteur électrique d'entraînement des galets 66, la venue en contact de friction de ces derniers avec le câble 20, et le retour du piston 32 dans sa position de repos comme l'illustre la Fig. 5. On remarquera que la mise sous pression des passages 78 et 56 est rendue possible par le fait que le piston 88 est décalé vers la droite sous l'action du ressort 90, de telle sorte que la communication entre les orifices 106 et 108 est interrompue et que le passage 110 ne communique pas avec l'atmosphère. Ceci résulte du fait que l'orifice de fuite avant 102 n'est pas obturé par l'olive 120 de l'organe 114, de telle sorte que la chambre 96 est mise à l'atmosphère. La sonde 22 est ainsi ramenée vers le dispositif d'entraînement 10 par le moteur électrique (non représenté) agissant sur les galets 66 à une vitesse constante et réglable comprise, par exemple, entre 0,05 et 0,5 m/s.

Lorsque la sonde 22 revient dans la partie 43 du passage 18 ménagé dans le dispositif d'entraînement 10, sous l'action de la force d'entraînement exercée par les galets 66 sur le câble 20 par le moteur électrique à vitesse constante et réglable (non représenté), l'olive 120 de l'organe avant 114 pénètre dans la partie 103 du passage 18, de telle sorte que l'épaulement 124 vient engager l'extrémité de cette partie 103, comme l'illustre la Fig. 2. L'orifice de fuite avant 102 est alors obturé, de telle sorte que la pression régnant dans le passage 100 et dans la chambre 96 augmente. Le piston 88 est donc sollicité vers la gauche à l'encontre du ressort 90 comme l'illustre la Fig. 6.

La gorge 104 formée sur le piston 88 vient alors en vis-à-vis des passages 106 et 108, de telle sorte que les chambres 62, le manocontact 58 et la chambre 74 communiquent avec l'atmosphère. L'alimentation du moteur électrique d'entraînement des galets 66 est interrompue et ces derniers sont sollicités à nouveau en éloignement du câble 20 sous l'action du ressort 64. On remarquera que la constitution en trois parties de l'organe 114 permet au ressort 122 d'amortir le choc occasionné par la pénétration de l'olive 120 dans la partie 103 du passage 18.

Dès que la communication entre la source de fluide sous pression et l'orifice d'entrée 36 du système 24 est interrompue, le tiroir 26 reprend la position représentée sur la Fig. 3, de telle sorte qu'un nouveau tube peut être contrôlé en raccordant l'extrémité libre de la partie 43 du passage 18 à ce tube.

Il ressort de ce qui précède que la conception et la réalisation du dispositif d'entraînement de sonde selon l'invention sont particulièrement simples et permettent de réaliser celui-ci sous la forme d'un pistolet portatif à commande unique susceptible d'être amené successivement en vis-à-vis de chacun des tubes de l'appareil à contrôler. L'ensemble des mouvements de la sonde à l'intérieur du tube est réalisé en manœuvrant une commande unique associée à la source de fluide sous pression (non représentée), permettant de communiquer le fluide sous pression, par le tuyau souple 38, à l'orifice d'entrée 36 du système de commande automatique 24. Ce dernier contrôle alors, de façon automatique, successivement l'introduction rapide de la sonde dans le tube par fluide sous pression, l'interruption de la communication de fluide sous pression entre la source et le tube à contrôler lorsque la sonde atteint sa position extrême avant, l'embrayage et la mise en œuvre du moyen d'entraînement à vitesse constante et réglable que constituent le moteur électrique d'entraînement (non représenté) et les galets 66, da façon à contrôler le tube en ramenant la sonde à la vitesse constante désirée, et enfin le débrayage et l'arrêt du moyen d'entraînement électrique lorsque la sonde atteint sa position extrême arrière représentée sur la Fig. 2.

## Revendications

1. Dispositif d'entraînement pour sonde de contrôle de tubes, et notamment pour sonde de mesure à courants de Foucault, ce dispositif comprenant un câble (20) auquel est relié la sonde (22), des moyens d'entraînement électriques aptes à agir sur ledit câble, et une source de fluide sous pression, caractérisé en ce qu'il comprend de plus des moyens de détection (52, 102, 120) des positions extrêmes avant et arrière de la sonde (22) dans le tube, un système de commande automatique (24) à fluide sous pression comprenant un boîtier (12, 14) définissant un premier alésage (28) et un tiroir (26) reçu en coulissement dans ledit alésage (28), le boîtier (12, 14) comportant un orifice d'entrée (36) qui communique avec la source de fluide sous pression et un premier orifice de sortie (40) qui communique avec le tube à contrôler en arrière de la sonde (22), et des moyens (58) de mise en œuvre des moyens d'entraînement électriques sensibles à la position du tiroir (26) dans ledit alésage (28), le tiroir (26) étant sensible à la mise en œuvre des moyens de détection avant (102) et arrière (52) pour se déplacer dans ledit alésage (28) afin, soit de mettre en communication l'orifice d'entrée (36) avec ledit orifice de sortie (40), soit d'actionner les moyens (58) de mise en œuvre des moyens d'entraînement électriques, respectivement.

2. Dispositif selon la revendication 1, caractérisé en ce que les moyens d'entraînement électriques définissent une vitesse d'extraction de la sonde constante et réglable.

3. Dispositif selon l'une quelconque des revendications 1 et 2, caractérisé en ce que le boîtier (12, 14) comporte un deuxième orifice de sortie (54) qui communique avec un manocontact (58) constituant les moyens de mise en œuvre des moyens d'entraînement électriques.

4. Dispositif selon l'une quelconque des revendications 1 à 3, caractérisé en ce que les moyens d'entraînement électriques de la sonde (22) agissent sur ledit câble (20) par l'intermédiaire de moyens d'embrayage (60, 66) normalement débrayés.

5. Dispositif selon la revendication 4, prise en combinaison avec la revendication 3, caractérisé en ce que les moyens d'embrayage comprennent au moins deux galets (66) susceptibles de venir engager le câble (20) par friction sous l'action du fluide sous pression provenant du deuxième orifice de sortie (54), à l'encontre de moyens élastiques de rappel (64).

6. Dispositif selon l'une quelconque des revendications précédentes, caractérisé en ce que les moyens de détection comprennent un organe avant (114) et un organe arrière (116) portés par le câble (20), lesdits organes étant susceptibles de venir obturer un orifice de fuite avant (102) et un orifice de fuite arrière (52) communiquant avec la source de fluide sous pression, lorsque la sonde atteint la position extrême avant et la position extrême arrière, respectivement, de façon à contrôler le fonctionnement du système de commande automatique (24).

7. Dispositif selon la revendication 6, caractérisé en ce que le câble est reçu dans un passage (18) ménagé dans le boîtier (12, 14), ce passage définissant une partie avant (103) et une partie arrière (53) destinées à recevoir respectivement l'organe avant (114) et l'organe arrière (116), les orifices de fuite avant (102) et arrière (52) débouchant respectivement dans la partie avant et dans la partie arrière du passage.

8. Dispositif selon la revendication 7, caractérisé en ce que le boîtier est réalisé en deux parties (12, 14) articulées dont le plan de joint passe par l'axe dudit passage.

9. Dispositif selon la revendication 8, caractérisé en ce que les moyens d'entraînement électriques sont disposés dans l'une (12) desdites parties, le système de commande automatique (24) étant disposé dans l'autre partie (14).

10. Dispositif selon l'une quelconque des revendications 6 à 9, caractérisé en ce que les organes avant (114) et arrière (116) comprennent chacun une partie (118) fixée au câble (20), une partie (120) susceptible de venir obturer l'orifice de fuite (102, 52) correspondant, et des moyens d'amortissement (122) disposés entre lesdites parties.

11. Dispositif selon l'une quelconque des revendications 6 à 10, caractérisé en ce que le système de commande automatique (24) comprend de plus un premier piston (32) reçu en coulissement dans ledit alésage (28) et définissant avec la paroi du boîtier (14) une chambre avant (68) communiquant avec l'orifice de fuite arrière (52), de telle sorte que l'obturation de ce dernier par l'organe arrière (116) commande le déplacement du premier piston (32) et du tiroir (26), de façon à interrompre la communication entre l'orifice d'entrée (36) et le premier orifice de sortie (40) et à actionner les moyens (58) de mise en œuvre des moyens d'entraînement électriques.

12. Dispositif selon l'une quelconque des revendications 6 à 11, prises en combinaison avec l'une des revendications 3 et 5, caractérisé en ce que le système de commande automatique (24) comprend de plus un second piston (88) reçu en coulissement dans un second alésage (84) et définissant avec la paroi du boîtier (14) une chambre arrière (96) communiquant avec l'orifice d'entrée (36) et avec l'orifice de fuite avant (102), le boîtier définissant de plus un orifice d'échappement (108) communiquant avec l'atmosphère, le second piston étant sollicité par des moyens élastiques (90) vers une position dans laquelle la communication entre le second orifice d'entrée et l'orifice d'échappement est interrompue, et l'obturation de l'orifice de fuite avant (102) par l'organe avant (114) commandant le déplacement du second piston à l'encontre des moyens élastiques de façon à établir ladite communication.

**Claims**

1. Driving device for a tube-investigation probe, and especially for a probe measuring by means of Foucault currents, said device comprising a cable (20) to which the probe (22) is connected, electrical drive means adapted to act on said cable, and a source of pressurized fluid, characterized in that it additionally comprises detection means (52, 102, 120) for the extreme front and rear positions of the probe, a pressurized fluid automatic control system (24) comprising a casing (12, 14) defining a first bore (28) and a slide member (26) slidably fitting in said bore (28), the casing having an inlet (36) communicating with the source of pressurized fluid, and a first outlet (40) communicating with the tube to be investigated behind the probe (22), and means (58) to actuate the electrical drive means, sensitive to the position of the slide member (26) in said bore (28), the slide member (26) being sensitive to the actuation of front (102) and rear (52) detection means, and thereby movable in said bore (28), whereby respectively to put the inlet (36) in communication with said outlet (40), or to activate the actuation means (58) for the electrical drive means.

2. Device according to Claim 1, characterized in that the electric drive means provide a controllable constant extraction speed for the probe.

3. Device according to either of Claims 1 and 2, characterized in that the casing (12, 14) has a second outlet (54) communicating with a pressure switch (58) comprising the actuating means for the electrical drive means.

4. Device according to any one of Claims 1 to 3, characterized in that the electrical drive means for the probe (22) act on said cable (20) by way of normally disengaged engaging means (60, 66).

5. Device according to Claim 4, taken in combination with Claim 3, characterized in that the engaging means comprise at least two pulleys (66) adapted to engage the cable (20) by friction under the influence of pressurized fluid from the second outlet (54), in opposition to elastic return means (64).

6. Device according to any one of the preceding Claims, characterized in that the detection means comprise a forward unit (114) and a rear unit (116) carried on cable (20), said units being adapted to close a forward outlet port (102) and a rear outlet port (52) communicating with the pressurized fluid source when the probe reaches its respective extreme forward and rear positions, whereby to control the actuation of the automatic control system (24).

7. Device according to Claim 6, characterized in that the cable runs through a passage (18) formed in the casing (12, 14), said passage having front (103) and rear (53) portions adapted to receive respectively the forward (114) and rear units (116), the forward (102) and rear outlet ducts (52) opening respectively into the front and rear portions of the passage.

8. Device according to Claim 7, characterized in that the casing is formed in two hinged parts (12, 14) joined along a plane passing through the axis of said passage.

9. Device according to Claim 8, characterized in that the electrical drive means are located in one of said parts (12), the automatic control system (24) being located in the other part (14).

10. Device according to any one of Claims 6 to 9, characterized in that the forward (114) and rear (116) units each comprise a part (118) fixed to cable (20), a part (120) adapted to close a respective outlet port (105, 52), and shock-absorbing means (122) located between said parts.

11. Device according to any one of Claims 6 to 10, characterized in that the automatic control system (24) additionally comprises a first piston (32) slidably received in said bore (28) and defining, with the wall of casing (14), a forward chamber (68) communicating with the rear outlet port (52), whereby closing of the latter by the rear unit (116) controls displacement of the first piston (32) and the slide member (26), thereby to interrupt communication between the inlet (36) and the first outlet (40) and activate the actuating means (58) for the electrical drive means.

12. Device according to any one of Claims 6 to 11, taken in combination with one of Claims 3 and 5, characterized in that the automatic control system (24) additionally comprises a second piston (88) slidably received in a second bore (84) and defining, with the wall of casing (14), a rear chamber (96) communicating with the inlet (36) and the forward outlet port (102), the casing additionally defining a safety vent (108) communicating with the atmosphere, the second piston being urged by elastic means (90) towards a position in which communication between the second inlet and the safety vent is interrupted, and closing of the forward outlet port (102) by the forward unit (114) commanding displacement of the second piston into contact with the elastic means whereby to establish said communication.

**Ansprüch**

1. Antriebsvorrichtung für eine Sonde zum Prüfen von Rohren, insbesondere für eine mit Foucault'schen Strömen arbeitende Meßsonde, mit einem mit der Sonde (22) verbundenen Kabel (20), elektrischen Antriebsmitteln, die geeignet sind, auf das Kabel zu wirken, und einer Druckfluidquelle, dadurch gekennzeichnet, daß die Vorrichtung umfaßt Erfassungsmittel (52, 102, 120) für die äußerste vordere und hintere Lage der Sonde (22) in dem Rohr, ein mit Druckfluid arbeitendes, automatisches Steuersystem (24), mit einem Gehäuse (12, 14), das eine erste Bohrung (28) und einen verschiebbar von der Bohrung (28) aufgenommenen Schieber (26) aufweist, wobei das Gehäuse (12, 14) eine Einlaßöffnung (36), weche mit der Druckfluidquelle in Verbindung steht, und eine erste Auslaßöffnung (40) aufweist, welche mit dem zu prüfenden Rohr hinter der Sonde (22) in Verbindung steht, und auf die Lage des Schiebers (26) in der Bohrung (28) ansprechenden Mitteln (58) zur Inbetriebnahme der elektrischen Antriebsmittel, wobei der Schieber (26) auf den Einsatz der Erfassungsmittel für die vordere (102) und die hintere (52) Lage anspricht, um sich in der Bohrung (28) zu verschieben, damit entweder eine Verbindung zwischen der Einlaßöffnung (36) und der Auslaßöffnung (40) hergestellt wird, oder die Mittel (58) zur Inbetriebnahme der elektrischen Antriebsmittel betätigt werden.

2. Vorrichtung nach Anspruch 1, dadurch gekennzeichnet, daß die elektrischen Antriebsmittel eine konstante und einstellbare Herausziehgeschwindigkeit für die Sonde festlegen.

3. Vorrichtung nach Anspruch 1 oder 2, dadurch gekennzeichnet, daß das Gehäuse (12, 14) eine zweite Auslaßöffnung (54) aufweist, welche mit einem Druckregler (58) in Verbindung steht, welcher die Mittel zur Inbetriebnahme der elektrischen Antriebsmittel bildet.

4. Vorrichtung nach einem der Ansprüche 1 bis 3, dadurch gekennzeichnet, daß die elektrischen Antriebsmittel der Sonde (22) über normalerweise ausgekuppelte Kupplungsmittel (60, 66) auf das Kabel (20) wirken.

5. Vorrichtung nach Anspruch 4 in Kombination mit Anspruch 3, dadurch gekennzeichnet, daß die Kupplungsmittel wenigstens zwei Rollen (66) aufweisen, die durch die Wirkung des Druckfluids, welches von der zweiten Auslaßöffnung (54) herkommt, entgegen elastischer Rückführmittel (64) mit dem Kabel (20) in Reibungseingriff bringbar sind.

6. Vorrichtung nach irgendeinem der vorhergehenden Ansprüche, dadurch gekennzeichnet, daß die Erfassungsmittel ein vorderes Organ (114) und ein hinteres Organ (116) aufweisen, die von dem Kabel (20) gehalten sind, und durch die eine vordere Lecköffnung (102) und eine hintere Lecköffnung (52), die mit der Druckfluidquelle in Verbindung stehen, verschließbar sind, wenn die Sonde die äußerste vordere Lage bzw. die äußerste hintere Lage einnimmt, so daß die Arbeitsweise des automatischen Steuersystems (24) gesteuert werden kann.

7. Vorrichtung nach Anspruch 6, dadurch gekennzeichnet, daß das Kabel von einem Druchlaß (18) aufgenommen wird, welcher in dem Gehäuse (12, 14) ausgebildet ist und einen vorderen Abschnitt (103) und einen hinteren Abschnitt (153) festlegt, die zur Aufnahme des vorderen Organs (114) bzw. des hinteren Organs (116) bestimmt sind, und daß die vordere (102) und die hintere (52) Lecköffnung in den vorderen Abschnitt bzw. den hinteren Abschnitt des Durchganges münden.

8. Vorrichtung nach Anspruch 7, dadurch gekennzeichnet, daß das Gehäuse aus zwei gelenkig miteinander verbundenen Teilen (12, 14) besteht, deren Verbindungsebene durch die Achse des Durchganges verläuft.

9. Vorrichtung nach Anspruch 8, dadurch gekennzeichnet, daß die elektrischen Antriebsmittel in einem der Teile (20) angeordnet sind und daß das automatische Steuersystem (24) in dem anderen Teil (14) angeordnet ist.

10. Vorrichtung nach mindestens einem der Ansprüche 6 bis 9, dadurch gekennzeichnet, daß das vordere (114) und das hintere (116) Organ jeweils ein an dem Kabel (20) befestigtes Teil (118), ein Teil (120), welches zum Sperren der entsprechenden Lecköffnung (102, 52) geeignet ist, und zwischen diesen Teilen angeordnete Dämpfungsmittel (122) aufweisen.

11. Vorrichtung nach irgendeinem der Ansprüche 6 bis 10, dadurch gekennzeichnet, daß das automatische Steuerungssystem (24) ferner einen ersten Kolben (32) aufweist, der verschiebbar in der Bohrung (28) aufgenommen ist und mit der Wandung des Gehäuses (14) eine vordere Kammer (68) begrenzt, welche mit der hinteren Lecköffnung (52) in Verbindung steht, so daß das Versperren letzterer durch das hintere Organ (116) die Verschiebung des ersten Kolbens (32) und des Schiebers (26) so steuert, daß die Verbindung zwischen der Einlaßöffnung (36) und der ersten Auslaßöffnung (40) unterbrochen ist und die Mittel (58) zur Inbetriebnahme der elektrischen Antriebsmittel betätigt werden.

12. Vorrichtung nach irgendeinem der Ansprüche 6 bis 11, in Kombination mit einem der Ansprüche 3 und 5, dadurch gekennzeichnet, daß das automatische Steuerungssystem (24) ferner einen zweiten Kolben (88) aufweist, der verschiebbar in einer zweiten Bohrung (84) aufgenommen ist und mit der Wand des Gehäuses (14) eine hintere Kammer (96) bildet, die mit der Einlaßöffnung (36) und mit der vorderen Lecköffnung (102) in Verbindung steht, daß das Gehäuse ferner eine mit der Atmosphäre in Verbindung stehende Austrittsöffnung (108) festlegt, daß der zweite Kolben durch elastische Mittel (90) in eine Lage belastet ist, in der die Verbindung zwischen der zweiten Einlaßöffnung und der Austrittsöffnung unterbrochen ist, und daß das Versperren der vorderen Lecköffnung (102) durch das vordere Organ (114) die Verschiebung des zweiten Kolbens entgegen der elastischen Mittel derart steuert, daß die genannte Verbindung herstellbar ist.

FIG. 1

0 026 701

FIG. 2

FIG. 3

FIG. 4

FIG. 5

FIG. 6

4